# DEMANDE DE BREVET EUROPEEN

(11) **EP 2 283 725 A1**
(43) Date de publication de la demande: **16.02.2011**
(21) Numéro de dépôt: 10172197.5
(22) Date de dépôt: 06.08.2010
(51) Int. Cl.: A01L 7/02

(54) **Plaque d'amortissement pour ferrure équestre**

(30) Priorité: 07.08.2009 FR 0955581
(71) Demandeur: A.C Concepts, 72000 Le Mans (FR)
(72) Inventeur: Corona, Jean-Pierre, 72210 Voivres les le Mans (FR)
(74) Mandataire: Bomer, Françoise Marie

(57) **Abrégé**

L'invention concerne une plaque d'amortissement (1) pour ferrure équestre, destinée à être insérée et fixée entre le pied d'un cheval et un fer à cheval.

Elle est constituée d'une plaque mince en matériau élastiquement déformable et comprend une zone périphérique (2) sensiblement en forme de U, une zone centrale (3) de soutien de sole et une zone postérieure (4) de soutien de fourchette, ces deux dernières zones (3, 4) étant concaves et faisant saillie uniquement sur la face intérieure (13) de la plaque tandis que leur concavité est orientée vers la face extérieure (14) de la plaque. Ces deux zones (3, 4) sont déformables selon un axe perpendiculaire à la plaque.

## Description

L'invention se situe dans le domaine de la maréchalerie.

La présente invention concerne plus particulièrement une plaque d'amortissement pour ferrure équestre, destinée à être montée entre la sole (ou voute plantaire) du pied du cheval et un fer à cheval.

On connaît déjà dans l'état de la technique, une telle plaque d'amortissement plane, d'épaisseur faible et constante, réalisée en matière plastique et dont le contour épouse celui du sabot d'un cheval. Cette plaque a pour fonction de protéger la sole du pied.

On connait également d'après le document US 4 513 825, un patin, destiné à être inséré entre la sole et le fer, constitué d'une plaque pleine dont le contour épouse celui du sabot du cheval. Cette plaque présente sur sa face externe des éléments en saillie, pleins, sensiblement rectangulaires qui participent à la stabilisation du pied du cheval et à l'absorption des chocs et sur sa face interne un élément en saillie triangulaire destiné à pénétrer dans la "fourchette" du pied du cheval. Pour mémoire, la "fourchette" est un coin de corne molle, élastique, situé sur la face inférieure du sabot.

Dans ces dispositifs connus, la présence d'éléments pleins, de part et d'autre d'une plaque également pleine, crée une surépaisseur qui a surtout pour effet de soutenir fortement la sole du cheval et de la fourchette, accentuant ainsi l'élasticité transversale du pied, de façon exagérée et anormale. Toutefois, ils ne permettent absolument pas d'utiliser et d'améliorer l'amortissement vertical, qui fait partie du fonctionnement biomécanique du pied du cheval. De plus, ces plaques limitent en partie la pénétration naturelle du pied dans un sol souple. Or, ce point est très important chez les chevaux de sport qui pratiquent par exemple des courses d'endurance ou du saut d'obstacle et dont les membres sont fortement sollicités à cette occasion, notamment aux allures du trot et du galop.

L'invention a pour but de fournir une plaque d'amortissement qui résolve les inconvénients précités de l'état de la technique et qui permette notamment d'augmenter le phénomène d'amortissement naturel du pied du cheval et l'adhérence du pied dans un sol souple.

L'invention a également pour but de prévenir l'apparition de tendinopathies qui peuvent apparaître avec l'emploi des plaques pleines connues de l'art antérieur.

A cet effet, l'invention concerne une plaque d'amortissement pour ferrure équestre, destinée à être insérée et fixée entre le pied d'un cheval et un fer à cheval.

Conformément à l'invention, elle est constituée d'une plaque mince en matériau élastiquement déformable dont le contour correspond sensiblement à celui du sabot d'un cheval, cette plaque comprenant une face intérieure destinée à venir au contact de la sole du pied d'un cheval et une face extérieure opposée, cette plaque comprend trois zones, à savoir :
- une zone périphérique ayant sensiblement la forme d'un U, dont la face extérieure est plane et destinée à venir au contact dudit fer à cheval et dont la face intérieure est également plane,
- une zone centrale, dite "de soutien de la sole", ayant également sensiblement la forme d'un U, s'étendant à l'intérieur du U de ladite zone périphérique et selon la même orientation, et
- une zone postérieure, dite "de soutien de fourchette", qui s'étend depuis l'intervalle situé entre les deux branches du U de ladite zone centrale, en direction de l'extrémité postérieure de ladite plaque d'amortissement,
les zones de soutien de sole et de soutien de fourchette sont concaves, leur concavité étant orientée vers la face extérieure de la plaque, font saillie uniquement sur la face intérieure de la plaque depuis le plan de ladite zone périphérique et sont déformables selon un axe perpendiculaire ou sensiblement perpendiculaire au plan de ladite face extérieure.

Selon d'autres caractéristiques avantageuses et non limitatives de l'invention, prises seules ou en combinaison :
- la plaque comprend un axe longitudinal médian et la zone de soutien de fourchette comprend une saillie centrale de forme oblongue s'étendant le long dudit axe longitudinal médian et deux saillies latérales également de forme oblongue disposées de part et d'autre de ladite saillie centrale ;
- les deux saillies latérales s'étendent selon un axe longitudinal formant un angle aigu compris entre 13° et 16° environ avec ledit axe longitudinal médian ;
- les extrémités antérieures des deux saillies sont situées à proximité du sommet de ladite zone de soutien de sole, ce sommet étant situé au niveau du bord postérieur du milieu du U de ladite zone de soutien de sole ;
- ladite zone périphérique présente une épaisseur décroissante entre l'extrémité postérieure et l'extrémité antérieure de la plaque :
- l'épaisseur de la zone de soutien de sole et l'épaisseur de la zone de soutien de fourchette sont inférieures à l'épaisseur de la zone périphérique, de façon à favoriser leur caractère déformable ;
- la zone périphérique présente une épaisseur comprise entre 2,5 mm et 4 mm environ et la zone de soutien de sole et la zone de soutien de fourchette présentent une épaisseur comprise entre 1,5 mm et 2 mm ;
- la plaque est réalisée dans un matériau choisi parmi le polyuréthane thermoplastique ou le PTE ;
- la plaque est réalisée dans un matériau d'une dureté comprise entre 90 et 98 shore A.
- la plaque est percée d'au moins un orifice formant clapet.

D'autres caractéristiques et avantages de l'invention apparaîtront de la description qui va maintenant en être faite, en référence aux dessins annexés, qui en représentent, à titre indicatif mais non limitatif, un mode de réalisation possible.

Sur ces dessins :
- la figure 1 est une vue de dessus de la plaque d'amortissement conforme à l'invention,
- les figures 2, 3 et 4 sont des vues en coupe de cette même plaque, respectivement selon les lignes II-II, III-III et IV-IV de la figure 1,

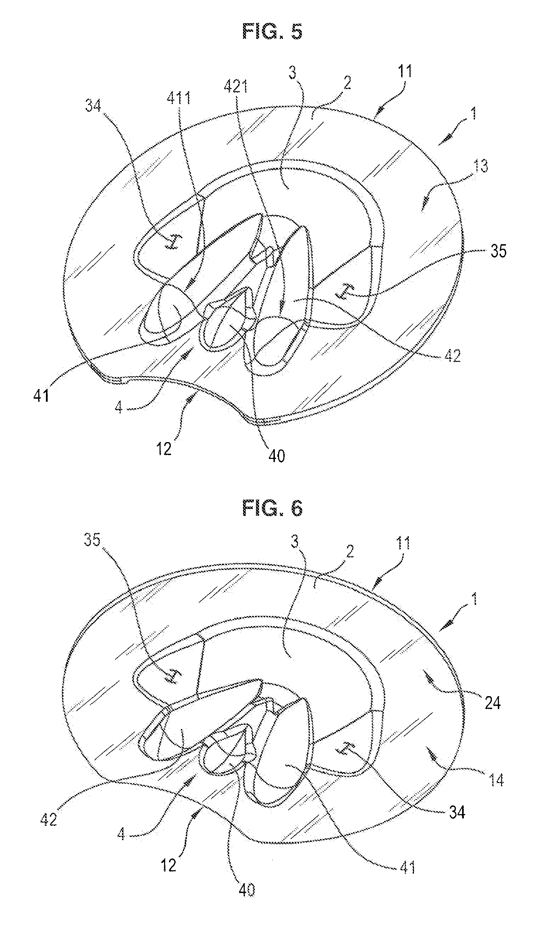

- les figures 5 et 6 sont des vues en perspective respectivement du dessus et du dessous de la plaque d'amortissement de la figure 1, à une échelle légèrement réduite,
- la figure 7 est une vue schématique de la surface plantaire du pied d'un cheval,
- les figures 8 et 9 sont des vues schématiques, selon un plan de coupe vertical transversal du pied d'un cheval, dans deux positions différentes.

La plaque conforme à l'invention est plus spécifiquement (mais non exclusivement) destinée à être mise en place sur les sabots de chevaux de sport, qui pratiquent des disciplines telles que le dressage, l'endurance, le saut d'obstacle ou le concours complet, par exemple.

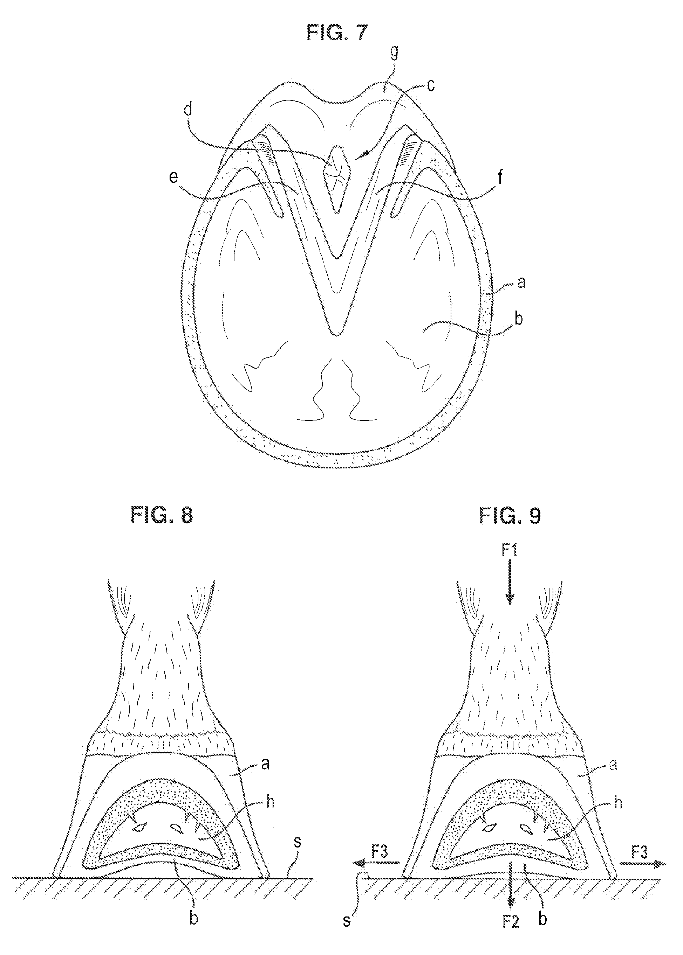

On commencera tout d'abord par rappeler quelques précisions concernant l'anatomie du pied d'un cheval, en se reportant à la figure 7 qui représente la surface plantaire de ce pied. Sur cette figure, la partie antérieure du pied est orientée vers le bas.

On peut y voir la paroi extérieure du sabot a, la sole b et la fourchette c. Cette fourchette c comprend elle-même plusieurs zones creuses, dénommées "lacunes", à savoir respectivement la lacune centrale d, la lacune latérale e et la lacune médiane f, étant entendu que la surface plantaire représentée est celle du pied gauche d'un cheval. Le talon du pied porte la référence g.

Sur la figure 8, qui représente un pied non ferré au repos, on peut voir l'os du pied h et l'on peut constater que la sole b est légèrement voutée par rapport au sol s.

Sur la figure 9, qui représente ce même pied pendant la course du cheval, on peut voir que le pied descend (flèche F1), ce qui a pour effet d'aplatir la sole b en direction du sol (flèche F2) et de provoquer son évasement latéral ainsi que celui du bord du sabot a (voir les flèches F3).

Ce mouvement correspond à l'amortissement naturel du pied du cheval.

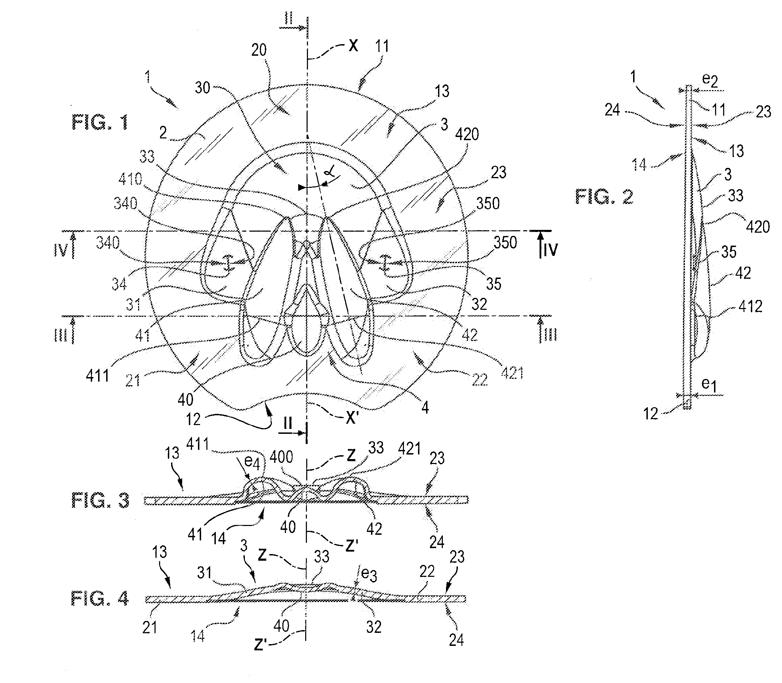

En se reportant aux figures 1 et 2, on peut voir une plaque d'amortissement conforme à l'invention, référencée 1, qui présente une faible épaisseur au regard de sa surface.

La plaque d'amortissement 1 présente une forme générale sensiblement ovale, un axe longitudinal médian X-X', une extrémité 11 dite "antérieure", car destinée à venir au contact de la partie antérieure du sabot, et une extrémité opposée 12, dite "postérieure", légèrement incurvée en direction du centre de la plaque 1.

La plaque d'amortissement 1 présente donc un contour qui épouse sensiblement celui du sabot du cheval.

La plaque d'amortissement 1 présente en outre une face 13, dite "intérieure", car destinée à venir au contact de la sole du pied d'un cheval et une face 14 opposée, dite "face extérieure".

Comme on peut le voir sur la figure 1, la plaque 1 se subdivise en 3 zones à savoir :
- une zone périphérique 2,
- une zone centrale 3, dite "de soutien de la sole", et
- une zone postérieure 4, dite "de soutien de fourchette".

La zone périphérique 2 est située, comme son nom l'indique, à la périphérie de la plaque 1. Elle présente en vue de dessus sensiblement la forme d'un U dont les extrémités des deux branches 21 et 22 sont légèrement rapprochées en direction l'une de l'autre.

La partie médiane 20 du U (ou fond du U) s'étend au voisinage de l'extrémité antérieure 11 de la plaque 1.

Comme cela apparaît mieux sur les figures 2 à 4, la face intérieure 23 de cette zone périphérique 2 est plane et destinée à venir au contact de la paroi a du sabot et du pourtour de la sole b lorsque la plaque est en place.

La face extérieure 24 de cette zone périphérique 2 est également plane. Elle est destinée à venir au contact du fer à cheval et sa forme correspond sensiblement à celle d'un fer.

La zone centrale 3 présente sensiblement la forme d'un U dont les deux branches 31 et 32 sont évasées latéralement et vers l'arrière de la plaque 1. La partie médiane du U est référencée 30. La zone 3 s'étend à l'intérieur de la zone périphérique 2 en U et selon la même orientation. En d'autres termes, le bord antérieur de la partie médiane 30 du U se situe dans le prolongement du bord postérieur de la partie médiane 20 en U de la zone périphérique 2.

Comme on peut mieux le voir sur les figures 2 et 4, cette zone centrale 3 est voutée ou concave et sa concavité est orientée en direction de la face extérieure 14 de la plaque 1.

La concavité de cette zone centrale 3 est telle que son point le plus haut ou "sommet" se situe à l'intersection entre l'axe médian X-X' et le bord postérieur de la partie médiane 30 du U de la zone centrale 3. Ce sommet porte la référence 33 sur les figures. A partir de ce point culminant 33, la couche de matériau constituant la zone centrale 3 s'étend en pente douce jusqu'au bord antérieur de la partie médiane 20 du U de la zone périphérique 2.

En outre, et comme cela apparaît mieux sur la coupe transversale de la figure 4, les branches 31, 32 de la zone centrale 3 présentent également une inclinaison depuis le sommet 33 en direction des branches latérales 21, respectivement 22, de la zone périphérique 2.

Lorsque la plaque 1 est en place sur le pied du cheval, la zone centrale 3 épouse ainsi la forme naturelle de la sole.

La zone postérieure 4 s'étend dans l'intervalle ménagé entre les deux branches 31, 32 de la zone centrale 3 et l'extrémité des deux branches 21 et 22 de la zone périphérique 2. Elle s'étend sensiblement depuis le centre de la plaque 1 en direction de l'extrémité postérieure 12 de celle-ci.

Cette zone 4 comprend une saillie centrale 40, de forme ovale, à extrémité pointue et dont l'axe longitudinal est coaxial avec l'axe médian X-X' de la plaque 1.

Cette saillie centrale 40 est destinée à soutenir la lacune centrale d de la fourchette du pied du cheval.

La zone postérieure 4 comprend également deux saillies 41, 42 de forme oblongue, disposées de part et d'autre de la saillie centrale 40 et de l'axe médian X-X'.

Les deux saillies 41 et 42 s'étendent selon un axe longitudinal formant un angle aigu α avec l'axe médian X-X' de la plaque. Cet angle α est compris entre 13° et 16° environ, par exemple entre 13° et 14° pour une plaque de petite dimension destinée à des chevaux ayant de plus petits sabots et entre 14° et 16°, de préférence 15° pour une plaque de plus grande dimension destinée à des chevaux ayant de plus grands sabots.

Ces deux saillies 41 et 42 sont destinées à soutenir respectivement les deux lacunes latérale et médiane du pied du cheval. De préférence, elles sont de forme identique, de sorte que l'axe médian X-X' constitue également un axe de symétrie de la plaque.

Les extrémités antérieures 410, respectivement 420, des deux saillies 41 et 42 sont situées à proximité du sommet 33. Ceci apparaît mieux sur la figure 2.

Comme on peut le voir sur les figures 2 à 4, les saillies 40, 41 et 42 de la zone 4 de soutien de fourchette et la zone centrale 3 font saillies uniquement sur la face intérieure de la plaque par rapport au plan de la zone périphérique 2, (vers la droite de la figure 2). En d'autres termes, aucun élément ne fait saillie depuis la face extérieure 14 de la plaque.

Les saillies 40, 41 et 42 sont creuses et leur concavité est orientée vers la face extérieure 14 de la plaque.

Comme cela apparaît mieux sur la vue en coupe de la figure 3, le sommet 400 de la saillie centrale 40 se situe sensiblement au même niveau de hauteur que le sommet 33 de la zone centrale 3.

En revanche, les sommets 411, respectivement 421, des saillies 41, respectivement 42, sont plus haut que le sommet 400 de la saillie 40. Par rapport au plan de la face extérieure 14 de la plaque, les saillies 41 et 42 sont sensiblement deux fois plus élevées que la saillie centrale 40.

Ainsi, la zone postérieure 4 s'adapte parfaitement à la forme naturelle de la fourchette c.

Enfin, la plaque 1 est munie d'au moins un clapet, de préférence de deux, références 34 et 35. La plaque 1 est percée d'une fente en forme de "I" qui délimite deux lèvres 340 pour le clapet 34, respectivement deux lèvres 350 pour le clapet 35.

Ces deux clapets autorisent le passage d'une seringue afin d'injecter un matériau, tel que du silicone, entre la plaque d'amortissement 1 et la sole du pied du cheval, une fois que cette plaque a été mise en place.

Comme représenté sur la figure 1, ces deux clapets 34 et 35 sont ménagés respectivement dans les extrémités postérieures des deux branches 31, 32 de la zone centrale 3.

Le matériau utilisé pour la réalisation de la plaque d'amortissement 1 est élastiquement déformable. On utilise de préférence du polyuréthane thermoplastique (TPU) ou un élastomère thermoplastique (TPE).

Parmi ces matériaux élastiquement déformables, on pourra également choisir des matériaux de duretés différentes, afin de pouvoir répondre aux diverses contraintes d'usure, imposées par la nature des sols sur lesquels évoluent les chevaux, notamment un sol souple, un sol dur ou un sol abrasif.

Par convention, on considérera qu'un sol dur, est un sol non déformable tel qu'un sol en asphalte, en goudron, ou plus généralement un sol très sec.

Au contraire, un sol souple est un sol déformable, tel qu'un terrain sportif (hippodrome), un terrain synthétique ou un terrain en herbe.

Un sol abrasif est considéré comme un terrain ayant une tendance à l'usure sous l'effet du passage des chevaux.

A titre d'exemple, on choisira plutôt un matériau ayant une dureté shore A comprise entre 90 et 94 pour un usage sur un sol souple et un matériau ayant une dureté shore A comprise entre 94 et 98 pour un usage sur un sol dur ou abrasif.

On notera également que les différentes zones de la plaque d'amortissement 1 présentent des épaisseurs différentes.

Ainsi, la zone périphérique 2 est la plus épaisse et son épaisseur est comprise entre 2,5 mm et 4 mm environ.

De plus, et de façon avantageuse, cette zone périphérique 2 présente une épaisseur décroissante entre son extrémité postérieure 12 et son extrémité antérieure 11. Ainsi, à titre d'exemple, et comme on peut le voir sur la figure 2, l'épaisseur **e1** de l'extrémité 12 (de part et d'autre de la zone postérieure 4) est de 3,8 mm, tandis que l'épaisseur **e2** de l'extrémité 11 est de 2,8 mm.

En outre, l'épaisseur **e3** de la zone centrale 3 est avantageusement de 1,9 mm et celle **e4** des saillies 40, 41 et 42 est de l'ordre de 2 mm. On notera toutefois que les figures annexées ne traduisent pas visuellement cette "quasi-égalité" d'épaisseur.

Ces différentes épaisseurs, combinées au choix d'un matériau élastiquement déformable, autorisent la déformation principalement de la zone centrale 3 de soutien de sole, selon un axe Z-Z' perpendiculaire ou sensiblement perpendiculaire au plan de la face extérieure 14.

Le fait que les zones centrale 3 et postérieure 4 soient plus minces que le reste de la plaque renforce la capacité à se déformer de ces zones.

De façon avantageuse, la plaque d'amortissement 1 est prévue en plusieurs tailles, par exemple deux tailles différentes, de façon à pouvoir s'adapter au mieux aux différentes morphologies de pied.

De préférence, la plaque 1 est fabriquée par un procédé de moulage par injection.

La mise en place de la plaque d'amortissement conforme à l'invention va maintenant être décrite.

Le maréchal ferrant sélectionne la plaque d'amortissement 1 de dimension appropriée et la positionne de façon que sa face intérieure 13 soit plaquée contre la sole du pied du cheval et que les saillies 40, 41 et 42 viennent se positionner respectivement dans les lacunes centrale d, latérale e et médiane f.

Il applique ensuite le fer à cheval sur la face extérieure 14 de la plaque et fixe ce fer à cheval à l'aide de clous, de façon connue de l'état de la technique, ces clous traversant la zone périphérique 2 pour venir se fixer dans la corne du sabot du cheval.

Ensuite, il peut injecter du silicone ou une résine, à l'aide d'une seringue, dans l'espace résiduel entre la sole du pied du cheval et la plaque d'amortissement 1, et ce, au travers des clapets 34, 35. Ceci favorise l'adhérence de la plaque 1 contre le pied du cheval.

Lorsque le cheval court, il applique le pied sur le sol en commençant par le talon g, puis la sole b descend en direction du sol s en venant écraser la zone centrale 3 de la plaque et, de façon moindre, les différentes saillies 40, 41, 42 de la zone de soutien de fourchette 4. L'élasticité de la plaque 1, sa forme et ses différences d'épaisseur lui permettent d'accompagner le mouvement d'amortissement naturel du pied du cheval, décrit précédemment en liaison avec les figures 8 et 9. Lorsque le cheval relève le pied, la plaque 1 reprend sa forme initiale

Comparativement aux plaques de l'art antérieur, qui étaient des plaques pleines et épaisses, la plaque d'amortissement conforme à l'invention présente cinq avantages majeurs :
a) augmentation du phénomène naturel d'amortissement du pied : la géométrie de la plaque qui reproduit la forme de la voute plantaire permet d'optimiser la descente et l'amortissement du pied lors de la mise sous charge (appui). Contrairement aux plaques pleines connues de l'état de la technique, elle permet de suivre la déformabilité du pied et d'absorber les chocs en rendant possible la phase d'affaissement de la voute plantaire.
b) augmentation de l'adhérence du pied dans un sol souple : le profil de la face intérieure 13 qui reproduit la structure de la fourchette du pied, combiné au profil creux de la face extérieure 14, augmente l'adhérence au sol, évite les phénomènes de glissement, et permet de conserver l'adhérence inhérente à la structure naturelle du pied.
c) homogénéisation de l'application du silicone effectuée entre la plaque et le pied : lorsque l'on injecte du silicone sous une plaque plane de l'état de la technique, celui-ci se répartit d'une façon inégale, notamment parce qu'il vient s'accumuler au niveau des lacunes de la fourchette. Il en résulte un phénomène de pression trop important en ces points, susceptible d'engendrer une gêne et un inconfort localisé dans la région palmaire du pied et en partie distale du fléchisseur profond et de l'os du naviculaire. Un tel phénomène est susceptible d'aggraver des pathologies telles que des tendinites du fléchisseur profond ou des maladies naviculaires. Au contraire dans l'invention, le relief spécifique de la face intérieure 13 de la plaque permet, en épousant parfaitement la sole du pied du cheval, d'uniformiser l'épaisseur de matière injectée entre le pied et la plaque. On évite ainsi les amas gênants précités et le surdosage du silicone. La plaque conforme à l'invention permet de réduire d'environ 30 % la quantité de silicone appliquée.
d) optimisation de la phase d'arrivée du pied antérieur du cheval sur le sol : au trot ou au galop, le pied arrive sur le sol par le talon, puis se pose ensuite à plat, de façon plus stable. La surface d'appui se trouvant sous le pied du cheval par l'intermédiaire du fer et de la plaque influe sur la pénétration dans un sol souple et a des répercussions sur la tension des tendons reliés aux trois phalanges du pied du cheval. De par sa concavité, la plaque favorise un fonctionnement qui respecte la biomécanique naturelle du pied du cheval, ainsi que les tensions au niveau des ligaments et des tendons qui existent lors du mouvement naturel du pied du cheval.
e) prévention de certaines pathologies : l'utilisation de la plaque conforme à l'invention permet de mieux prévenir certaines tendinopathies du ligament suspenseur du boulet et du fléchisseur superficiel, qui sont des types de tendinites très fréquentes dans les disciplines sportives énoncées précédemment.

## Revendications

1. Plaque d'amortissement (1) pour ferrure équestre, destinée à être insérée et fixée entre le pied d'un cheval et un fer à cheval, **caractérisée en ce qu'**elle est constituée d'une plaque mince en matériau élastiquement déformable dont le contour correspond sensiblement à celui du sabot d'un cheval, cette plaque (1) comprenant une face intérieure (13) destinée à venir au contact de la sole du pied d'un cheval et une face extérieure (14) opposée, **en ce que** cette plaque (1) comprend trois zones, à savoir :
- une zone périphérique (2) ayant sensiblement la forme d'un U, dont la face extérieure (24) est plane et destinée à venir au contact dudit fer à cheval et dont la face intérieure (23) est également plane,
- une zone centrale (3), dite "de soutien de la sole", ayant également sensiblement la forme d'un U, s'étendant à l'intérieur du U de ladite zone périphérique (2) et selon la même orientation, et
- une zone postérieure (4), dite "de soutien de fourchette", qui s'étend depuis l'intervalle situé entre les deux branches (31, 32) du U de ladite zone centrale (3), en direction de l'extrémité postérieure (12) de ladite plaque d'amortissement,
et **en ce que** les zones de soutien de sole (3) et de soutien de fourchette (4) sont concaves, leur concavité étant orientée vers la face extérieure (14) de la plaque, font saillie uniquement sur la face intérieure (13) de la plaque depuis le plan de ladite zone périphérique (2) et sont déformables selon un axe (Z-Z') perpendiculaire ou sensiblement perpendiculaire au plan de ladite face extérieure (14).

2. Plaque selon la revendication 1, **caractérisée en ce qu'**elle comprend un axe longitudinal médian(X-X') et **en ce que** la zone de soutien de fourchette (4) comprend une saillie centrale (40) de forme oblongue s'étendant le long dudit axe longitudinal médian (X-X') et deux saillies latérales (41, 42) également de forme oblongue, disposées de part et d'autre de ladite saillie centrale (40).

3. Plaque selon la revendication 2, **caractérisée en ce que** les deux saillies latérales (41, 42) s'étendent selon un axe longitudinal formant un angle aigu (α) compris entre 13° et 16° environ avec ledit axe longitudinal médian (X-X').

4. Plaque selon la revendication 3, **caractérisée en ce que** les extrémités (410, 420) antérieures des deux saillies (41, 42) sont situées à proximité du sommet (33) de ladite zone de soutien de sole (3), ce sommet (33) étant situé au niveau du bord postérieur du milieu du U de ladite zone de soutien de sole (3).

5. Plaque selon l'une des revendications précédentes, **caractérisée en ce que** ladite zone périphérique (2) présente une épaisseur décroissante entre l'extrémité postérieure (12) et l'extrémité antérieure (11) de la plaque.

6. Plaque selon l'une des revendications précédentes, **caractérisée en ce que** l'épaisseur de la zone de soutien de sole (3) et l'épaisseur de la zone de soutien de fourchette (4) sont inférieures à l'épaisseur de la zone périphérique (2), de façon à favoriser leur caractère déformable.

7. Plaque selon l'une des revendications précédentes, **caractérisée en ce que** la zone périphérique (2) présente une épaisseur comprise entre 2,5 mm et 4 mm environ et **en ce que** la zone de soutien de sole (3) et la zone de soutien de fourchette (4) présentent une épaisseur comprise entre 1,5 mm et 2 mm.

8. Plaque selon l'une des revendications précédentes, **caractérisée en ce qu'**elle est réalisée dans un matériau choisi parmi le polyuréthane thermoplastique ou le PTE.

9. Plaque selon l'une des revendications précédentes, **caractérisée en ce qu'**elle est réalisée dans un matériau d'une dureté comprise entre 90 et 98 shore A.

10. Plaque selon l'une des revendications précédentes, **caractérisée en ce qu'**elle est percée d'au moins un orifice formant clapet (34, 35).
